# EUROPEAN PATENT APPLICATION

(11) **EP 3 431 736 A1**
(43) Date of publication of application: **23.01.2019**
(21) Application number: 17461571.6
(22) Date of filing: 20.07.2017
(51) Int. Cl.: F02C 6/08, F02C 7/06, F02C 7/18, F02K 9/66, F02C 5/04, F02B 43/10

(54) **HYDROGEN BASED SYSTEM FOR STORING AND RECOVERING ELECTRICAL ENERGY AND HYDROGEN-AND-OXYGEN BASED ROTARY JET ENGINE FOR USE IN SUCH SYSTEM**

(71) Applicant: Vahtec Sp. z o.o., 02-640 Warszawa (PL)
(72) Inventor: LISOWSKI, Zbigniew Jan, 43-100 Tychy (PL)
(74) Representative: Wlasienko, Jozef

(57) **Abstract**

A hydrogen based system (100) for storing and recovering energy according to the present invention comprises: an electrolyser (102), a storage unit (105) for hydrogen and oxygen, a fuel feeder (106), a hydrogen-and-oxygen based rotary jet engine (103), an electric generator (112) coupled with a rotary shaft of the engine (103), a control module (108) and an electronic control unit (ECU) (109).

A hydrogen-and-oxygen based rotary jet engine (103) according to the present invention for use in the system (100) comprises: a main engine body (120), a main engine shaft (147) and a rotor (128). The rotor (128) has a plurality of combustion chambers (122). In the main engine shaft (147) a main distribution duct (125) is hollowed out by means of which the hydrogen-and-oxygen mixture is supplied. Each combustion chamber (122) is in fluid connection with the main distribution duct (125) by means of a section fuel duct (124). Each combustion chamber (122) has an ignition duct (147) and an exhaust duct (149). In the main engine body (120) there is provided a magneto (126) and cavities (150) disposed around the rotor (128). The chambers (122) are separated from the rotor (128) by means of a flap valve (123) which opens into the cavity (150) as a result of an explosion in the combustion chamber (122). When the flap valve (123) opens and the rotor (128) rotates, part of the energy of the flame flows through the cavity (150) causing self-operating and cyclic ignition of the hydrogen-and-oxygen mixture in each subsequent combustion chamber (122). The steam is discharged through the steam discharging duct (121).

## Description

### Field of the Invention

The present invention relates to systems for storing electrical energy, and in particular to a hydrogen based system for storing electrical energy with a power station driven by a hydrogen-and-oxygen based jet engine. The invention also relates to a hydrogen-and-oxygen based jet engine for use in such a system.

### Background of the Invention

The use of water electrolysis to produce hydrogen and oxygen as a result of applying voltage to electrodes immersed in an aqueous solution has been known for a long time, however, the so called HHO gas (also known as Brown gas) that is formed as a result of mixing hydrogen and oxygen has only recently become the subject of a wider interest. The advantages of HHO gas, such as a relatively easy method of its production, high energy variety and pure steam produced as a result of combustion thereof, make it an excellent alternative for conventional fuels, in particular in view of depleting fossil fuel resources.

Despite considerable developments in the field of obtaining energy from the combustion of HHO gas, for example, when aiding the operation of combustion engines, there is still a need for solutions that would make it possible to effectively use the combustion of this gas in order to produce usable energy.

### Technical problem to be solved

The purpose of the present invention is to provide a system for storing and recovering electrical energy, the operation of which is based on the production and combustion of a hydrogen-and-oxygen mixture.

Another purpose of the present invention is to provide a hydrogen-and-oxygen based rotary jet engine for effective conversion of hydrogen-and-oxygen mixture combustion energy into mechanical energy.

### Summary of the Invention

The purpose of the present invention has been achieved by a hydrogen based system for storing and recovering energy according to claim 1, and by a hydrogen-and-oxygen based jet engine according to claim 13. Preferred variants of the invention are presented in dependent claims.

According to the present invention there is provided a hydrogen based system for storing and recovering energy comprising:
an electrolyser for the production of hydrogen and oxygen as a result of water electrolysis, comprising separate outlets for hydrogen and oxygen, respectively, and an inlet for the supply of water. The electrolyser is powered from an external source of electrical energy, the energy from which is to be stored;
a storage unit comprising two separate tanks for hydrogen and oxygen, respectively, wherein hydrogen and oxygen are separately supplied from the outlets of the electrolyser to the tanks by means of ducts equipped with pumps, wherein the tanks have inlets and outlets equipped with adjustable valves;
a fuel feeder for the production of a hydrogen-and-oxygen mixture, the fuel feeder being a tank having inlets in fluid connection with the outlets of the tanks, and an outlet equipped with an adjustable valve;
a hydrogen-and-oxygen based rotary jet engine comprising:
   - a main engine body comprising a first chamber of the engine body and a second chamber of the engine body;
   - a main engine shaft extending through the first chamber of the body;
   - a rotor connected to the main engine shaft and arranged inside the first chamber of the body;
wherein:
   - the rotor has a plurality of combustion chambers evenly disposed around the engine shaft;
   - in the main engine shaft a main distribution duct is hollowed out by means of which the hydrogen-and-oxygen mixture is supplied;
   - each combustion chamber is in fluid connection with the main distribution duct by means of a section fuel duct supplying the hydrogen-and-oxygen mixture to the chambers and equipped with a ball valve that prevents backflow to the main distribution duct;
   - each combustion chamber has an ignition duct and an exhaust duct extending to the perimeter of the rotor, which ducts are disposed in opposite directions relative to each other;
   - in the main engine body there is provided a magneto for initiating the operation of the engine by initially igniting the hydrogen-and-oxygen mixture in the chamber in the first cycle of operation, directly through the ignition duct;
   - the main engine body has cavities disposed around the rotor, each cavity corresponding to one combustion chamber and being separated from the rotor by means of a flap valve which is held in a closed position by a resilient element, wherein the flap valve opens into the cavity a result of an explosion in the combustion chamber and a jet of steam from the exhaust duct, and it directs the steam in a direction opposite to the direction of the resultant rotation of the rotor;
      wherein each of the cavities is connected to the neighbouring cavities and is connected with the second chamber of the body via a steam discharging duct;
      wherein the cavities are adapted such that, when the flap valve opens and the rotor rotates, part of the energy of the flame appearing in the combustion chamber flows, through the cavity, between the exhaust duct of one of the combustion chambers and the ignition duct of the next combustion chamber, causing self-operating and cyclic ignition of the hydrogen-and-oxygen mixture in each subsequent combustion chamber as the rotor rotates, wherein the steam is discharged through the steam discharging duct;
      wherein the second chamber of the body has a main exhaust duct discharging steam out of the engine;
      wherein the main distribution duct of the engine is connected by means of a conduit with the outlet of the fuel feeder in order to supply the hydrogen-and-oxygen mixture, wherein hot steam produced as a result of hydrogen combustion in oxygen in the engine is discharged from the main exhaust duct and, having been cooled, is supplied through a conduit to the inlet of the electrolyser, as a result of which the system forms a closed circuit,
an electric generator coupled with a rotary shaft of the engine for generating electrical energy as a result of the operation of the engine, said electrical energy being electrical energy recovered from the system;
a control module which controls the operation of the system, including the control of power supply to the electrolyser, the operation of the pumps of the system, the operation of the electric generator, and controls the adjustable valves of the fuel feeder and of the tanks;
an electronic control unit (ECU) coupled with the control module for controlling the operation of the engine and for conditioning control signals supplied to the system components.

Preferably, the rotor of the engine has three combustion chambers and operates in a three-cycle mode.

Preferably, in the first body chamber, the engine has one or more additional rotors having an identical structure and connected to the shaft, wherein each of the rotors has a separate housing, wherein the rotor housings are spaced apart from one another and are supported by means of a connector mounted to the main engine body,
wherein individual ducts of the housing of the first rotor and their corresponding ducts of the housings of the one or more additional rotors are connected to the exhaust collectors routing hot steam to the second chamber of the engine body, wherein the ducts of the housings of the one or more additional rotors are connected with the exhaust collectors by means of ducts formed in the connector,
wherein the main distribution duct is divided into separate sections of the main distribution duct, each section corresponding to the individual rotor, wherein each section of the main distribution duct is connected with individual conduits separated from the main duct supplying the hydrogen-and-oxygen mixture by means of fixed gas pipe joints with a side inlet, situated on the shaft in the spaces between the housings,
wherein the gas pipe joints are in the shape of a sleeve and are equipped with thrust cylinder bearings with leak stoppers provided at the place of contact with the shaft, wherein the shaft is provided with holes under the gas pipe joints so as to enable flow of gas from the gas pipe joints to the corresponding sections of the main distribution duct.

Preferably, the engine is located inside a water container and is immersed in water to ensure cooling and lubrication of the engine, wherein the water container has forced water circulation with an external cooling system.

Preferably, the fuel feeder is equipped with a pipe coil for heating the fuel feeder in order to compress the hydrogen-and-oxygen mixture contained therein, the pipe coil being incorporated in the conduit connecting the main exhaust duct discharging hot steam from the engine and the inlet of the electrolyser.

Preferably, the pipe coil is equipped with an electric heater for initially heating the fuel feeder.

Preferably, the system further comprises a system for recovering oxygen and hydrogen from steam, comprising:
- a high-voltage induction converter for converting hot steam into oxygen-and-hydrogen mixture, the converter comprising:
   - a cone-shaped ceramic casing having an outer strengthening jacket, wherein the casing has an inlet and an outlet, wherein the inlet is designed for supplying hot steam from the engine, wherein the casing tapers towards the outlet,
   - a hollow cylinder of the converter coaxially arranged inside the casing, wherein the outlet of the hollow cylinder for discharging the oxygen-and-hydrogen mixture recovered from steam is separated by means of an outlet nozzle from the outlet of the casing for discharging the remaining steam;
   - an induction coil with ceramic insulation, arranged inside the hollow cylinder and powered from an external alternating voltage source, wherein spaces are provided between the windings of the induction coil to enable the flow of steam;
   - a set of electrodes, arranged inside the induction coil, the set of electrodes being in the form of a plurality of metal plates radially mounted on a hollow ceramic openwork cylinder and separated by means of ceramic insulators, wherein the ceramic cylinder is placed in the axis of the induction coil, and neighbouring electrodes form pairs of positive electrodes and perforated negative electrodes, and each pair of the electrodes is electrically connected with a high voltage power source in a parallel circuit;
- a separator for separating the hydrogen-and-oxygen mixture from the converter into hydrogen and oxygen, wherein an inlet of the separator is connected with the exhaust nozzle of the hollow cylinder of the converter by means of a conduit equipped with a cooler for supplying the oxygen-and-hydrogen mixture to the separator, wherein the separator comprises:
   - a housing in the form of a double, cooled jacket, which has a inlet for supplying the hydrogen-and-oxygen mixture and a first and second outlet for discharging the separated gases, hydrogen and oxygen, respectively,
   - a hollow cylinder having permeable walls which is coaxially arranged in the housing, wherein space is provided between the hollow cylinder and the housing for discharging separated oxygen, the space being connected with the second outlet of the housing for discharging oxygen.
   - a hollow metal pipe having a plurality of holes which is coaxially arranged inside the hollow cylinder, wherein one end of the pipe is connected with the inlet of the separator, and the other end is connected with the first outlet of the housing for discharging hydrogen after separating oxygen,
   - a series of magnets forming a battery of magnets, which are sequentially located N/S around the pipe on spacing holders made of non-magnetic material and which are used for attracting oxygen particles;
   - vents having varying opening diameters, made of ferromagnetic material and arranged in said plurality of holes in the pipe between the magnets; wherein the vents are magnetized with a flux of magnet field such that they capture oxygen particles from the flowing hydrogen-and-oxygen mixture and lead them out of the pipe to the hollow cylinder from which oxygen flows to the space between the hollow cylinder and the housing,
      conduits connecting the first and second outlets of the separator with the inlets of the tanks for hydrogen and oxygen, respectively, wherein the conduits are equipped with pumps enforcing flow of the gases to the tanks.

Preferably, the converter is located in the second chamber of the engine body, wherein the casing and walls of the second chamber of the engine body form the casing and the jacket, of the converter, respectively, and the outlet nozzle constitutes the outlet of the second chamber of the engine.

Preferably, the electric generator is a high voltage generator which comprises the following component parts arranged in a concentric and symmetrical manner:
- an exciter comprising a core with a winding on the rotor side, and a core with a winding on the stator side, wherein constant voltage controlled by the control module is applied to the terminals of the winding (L₆) on the stator side;
- an output voltage generator comprising a core with a winding on the rotor side, and a core with a winding for generating utilization voltage and with a bifilar winding on the stator side, which are galvanically separated from one another, wherein the terminals of the winding on the rotor side are electrically connected with the terminals of the winding of the exciter on the rotor side;
- a compensating engine comprising neodymium magnets disposed alternately N/S on the rotor side, and a core with a winding on the stator side, wherein the terminals of the winding of the output voltage generator on the stator side are electrically connected with the terminals of the winding of the compensating engine on the stator side;
wherein the cores of the output voltage generator and of the compensating engine on the stator side are short-circuited and form a pole shoe in the shape of letter C with a gap in which a core with a wound and short-circuited winding is located, the core forming a resonance circuit for correcting the phase of currents flowing in the windings of the output voltage generator and of the compensating engine.

Preferably, the external source of electrical energy is an alternating voltage source, and the electrolyser is powered from the source by means of a rectifier unit.

Preferably, electrical energy is drawn to the system from the external source of electrical energy through a high voltage network and is recovered to it from the electric generator by means of a high-voltage substation controlled by the control module.

Preferably, the system is located in a concrete silo covered with a roof.

According to the invention there is also provided a hydrogen-and-oxygen based rotary jet engine for use in the system for storing and recovering electrical energy. The engine comprises:
- a main engine body comprising a first chamber of the engine body and a second chamber of the engine body;
- a main engine shaft extending through the first chamber of the body;
- a rotor connected to the main engine shaft and arranged inside the first chamber of the body,
wherein:
- the rotor has a plurality of combustion chambers evenly disposed around the engine shaft;
- in the main engine shaft a main distribution duct is hollowed out by means of which the hydrogen-and-oxygen mixture is supplied;
- each combustion chamber is in fluid connection with the main distribution duct by means of a section fuel duct, supplying the hydrogen-and-oxygen mixture to the chambers and equipped with a ball valve that prevents backflow to the main distribution duct;
- each combustion chamber has an ignition duct and an exhaust duct extending to the perimeter of the rotor, which ducts are disposed in opposite directions relative to each other;
- in the main engine body there is provided a magneto for initiating the operation of the engine by initially igniting the hydrogen-and-oxygen mixture in the chamber in the first cycle of operation, directly through the ignition duct;
- the main engine body has cavities disposed around the rotor, each cavity corresponding to one combustion chamber and being separated from the rotor by means of a flap valve which is held in a closed position by a resilient element, wherein the flap valve opens into the cavity as a result of an explosion in the combustion chamber and a jet of steam from the exhaust duct, and it directs the steam in a direction opposite to the direction of the resultant rotation of the rotor;
wherein each of the cavities is connected to the neighbouring cavities and is connected with the second chamber of the body via a steam discharging duct;
wherein the cavities are adapted such that, when the flap valve opens and the rotor rotates, part of the energy of the flame appearing in the combustion chamber flows, through the cavity, between the exhaust duct of one of the combustion chambers and the ignition duct of the next combustion chamber, causing self-operating and cyclic ignition of the hydrogen-and-oxygen mixture in each subsequent combustion chamber as the rotor rotates, wherein the steam is discharged through the steam discharging duct;
wherein the second chamber of the body has a main exhaust duct discharging steam out of the engine;

Preferably, the rotor of the engine has three combustion chambers and operates in a three-cycle mode.

Preferably, in the first body chamber, the engine has one or more additional rotors having an identical structure and connected to the shaft,
wherein each of the rotors has a separate housing,
wherein the rotor housings are spaced apart from one another and are supported by means of a connector mounted to the main engine body,
wherein individual ducts of the housing of the first rotor and their corresponding ducts of the housings of the one or more additional rotors are connected to the exhaust collectors routing hot steam to the second chamber of the engine body, wherein the ducts of the housings of the one or more additional rotors are connected with the exhaust collectors by means of ducts formed in the connector,
wherein the main distribution duct is divided into separate sections of the main distribution duct, each section corresponding to the individual rotor, wherein each section of the main distribution duct is connected with individual conduits separated from the main duct supplying the hydrogen-and-oxygen mixture by means of fixed gas pipe joints with a side inlet, situated on the shaft in the spaces between the housings,
wherein the gas pipe joints are in the shape of a sleeve and are equipped with thrust cylinder bearings with leak stoppers provided at the place of contact with the shaft, wherein the shaft is provided with holes under the gas joints so as to enable the flow of gas from the gas pipe joints to the corresponding sections of the main distribution duct.

The system composed of the above-mentioned components operates autonomously and independently of external fuel/energy supplies, but its main purpose is to store electrical energy and provide it when the demand increases. Such a concept of converting energy into a energy reserve in the form of hydrogen which is environmentally friendly and free of any emissions of pollutants to the atmosphere (apart from usable energy), as well as a concept of recover it and provide it to a network may eliminate problems related to the use of electrical energy in economy.

### BRIEF DESCRIPTION OF THE DRAWINGS

The invention will be better understood by referring the following detailed description of its embodiment, taken in conjunction with the accompanying drawings, in which:
Fig. 1 is a schematic view of a hydrogen based system for storing and recovering electrical energy with a power station driven by a hydrogen-and-oxygen based jet engine.
Fig. 2 is a schematic view of the hydrogen-and-oxygen based jet engine located in a protective water container with forced water circulation.
Fig. 3 is a partial longitudinal section view of the construction of the hydrogen-and-oxygen based rotary jet engine equipped with a high-voltage induction H₂O/HHO converter.
Fig. 4 is a schematic cross section view of the hydrogen-and-oxygen based rotary jet engine.
Fig. 5 is a schematic side view of a high-voltage induction H₂O/HHO converter.
Fig. 6 is a schematic front view of the high-voltage induction H₂O/HHO converter.
Fig. 7 schematically shows a separator capturing hydrogen and oxygen.
Fig. 8 schematically shows a synchronic high-voltage generator specially designed to cooperate with the hydrogen-and-oxygen based jet engine.
Fig. 9 is a longitudinal section of a part of the hydrogen-and-oxygen based jet engine comprising two rotors, according to another embodiment of the invention.

### DETAILED DESCRIPTION OF THE INVENTION

With reference to the above drawings, below is presented a detailed description of the present invention in accordance with preferred embodiments and in relation to the figures.

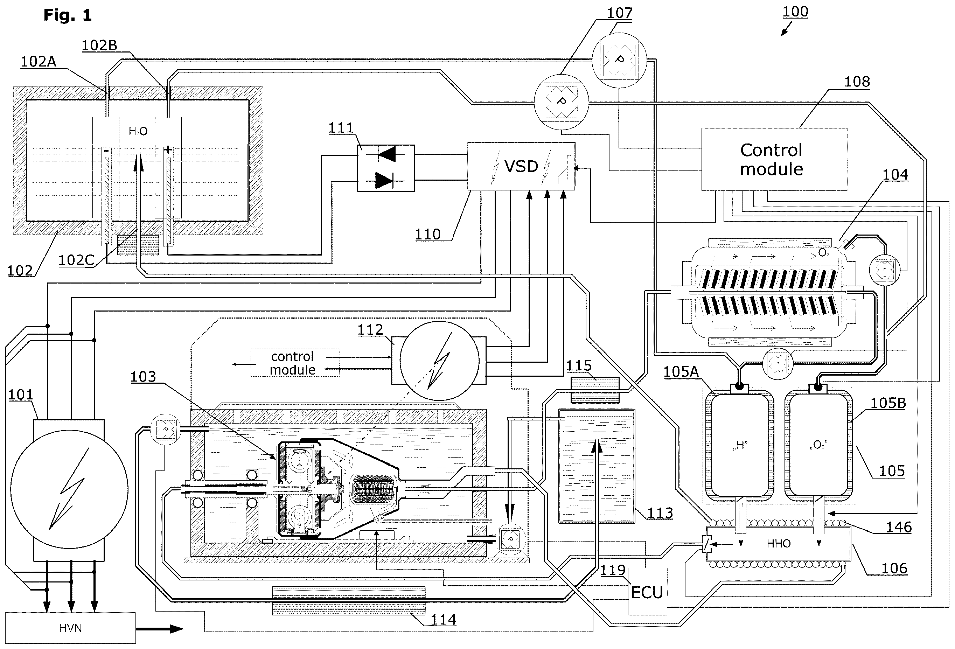

One embodiment of a hydrogen-based system 100 for storing and recovering electrical energy (hereafter also referred to as the system 100) is presented in Fig. 1. In the embodiment presented, it has been assumed that an external source 101 of electrical energy is a power unit existing e.g. on a wind farm or a photovoltaic power plant. The source 101 provides the system 100 with electrical energy necessary to produce hydrogen and oxygen, which are stored in the system 100. Energy may be provided to the system 100 in a situation where, for example, there is a surplus of produced electrical energy, e.g. at night. In the case of an increased demand for electrical energy, the energy from the system 100 is recovered, i.e. the system 100 produces energy and transmits it to a network, such as High Voltage Network (HVN), by means of inverse conversion - electrical energy is produced as a result of combustion of HHO gas. It should be noted, however, that the system 100 may also be used for storing and recovering energy in other applications, and the embodiment presented is nonlimiting and serves only as an illustrative example of the invention.
The main components of the system 100 for storing and recovering electrical energy as presented in the embodiment in Fig. 1 are: an electrolyser 102, a storage unit 105 for storing oxygen and hydrogen, a fuel feeder 106, a hydrogen-and-oxygen based rotary jet engine 103, a high-voltage induction H₂0/HHO converter 129, a separator 104 capturing hydrogen and oxygen, an electric generator 112, a control module 108 and an electronic control unit (ECU) 119. These and other elements of the system 100, their mutual relations and the principles of operation of the system 100 will be described in detail below with reference to the attached figures.

Electrical energy for the external source 101 in the form of the said power unit is provided to the electrolyser 102 via a high voltage substation (VDS) 110 and a rectifier unit 111. The rectifier unit 111 is used to power the electrolyser 102 with direct current (DC) of an appropriate value to produce oxygen and hydrogen. The function of a rectifier unit may be fulfilled by any electrical circuit suitable for this purpose, for example, by a full-wave rectifier. In other embodiments, in which the external source 101 has a different form, the rectifier unit 111 and/or the high voltage substation 110 may not be required, e.g. in the case where direct current (DC) of an appropriate value is directly supplied from the source 101.

Supply of electrical energy to the electrolyser 102, i.e. the actuation thereof, is controlled by the control module 108. In the presented embodiment, the control module 108 controls the operation of the high voltage substation 110. The high voltage substation 110 is commonly used in the energy sector and its control is ensured by controlling elements, such as contactors, which are switched as a result of control signals provided from the control module 108. As a result, the control module 108 may determine on a current basis operations such as connecting/disconnecting the system to/from the external network for storing electrical energy, connecting/disconnecting the electric generator 112 to/from the network for recovering electrical energy, etc. Connecting/disconnecting may take place at a time programmed in the control module 108 and/or may take place in response to specific events on the basis of measurement signals delivered to the control module 108, for example, in a situation where the energy efficiency of e.g. a wind farm with which the system 100 is coupled decreases below a set threshold value.

The drawn energy is used in the electrolyser 102 to produce hydrogen and oxygen by means of the electrolysis of an aqueous solution with an addition of e.g. lithium hydroxide. The construction of the electrolyser is well known by persons skilled in the art., therefore a detailed description of the electrolyser has been omitted for the sake of clarity. The hydrogen and oxygen obtained at outlets 102A, 102B, respectively, of the electrolyser are pumped to the storage unit 105 by conduits equipped with pumps 107 which are actuated by the control module 108. The pumps 107 used herein may be any commercially available pumps with suitably selected parameters ensuring the required efficiency and strength and adjusted to be controlled by the control module 108. The storage unit 105 comprises two separate tanks 105A, 105B designed for storing hydrogen and oxygen, respectively. For storage safety reasons, the tanks 105A, 105B may have double walls with water jackets and may be adjusted to withstand high pressures of stored gases, which may reach 300 bar. Each of the tanks 105A, 105B has an inlet and an outlet provided with adjustable valves, for example, solenoid valves or any other suitable valves, the opening rate of which is controlled by the control module 108; for example, adjustable inlet valves are opened when hydrogen and oxygen are being pumped into the tanks 105A, 105B, whereas adjustable outlet vales are opened in order to supply the gases to the fuel feeder 106.

If there is a need to recover energy from the system 100, the control module 108 starts the operation of a hydrogen-based power station consisting of the hydrogen-and-oxygen based rotary jet engine 103 (hereafter also referred to as the engine 103) and the electric generator 112 coupled with the engine 103. At the beginning, the control module 108 initiates the operation of the engine 103 by a mechanical starting of the engine 103. This is carried out by means of the electric generator 112 operated in engine mode. At the same time, the control module 108 sends a signal to start pumping the oxygen-and-hydrogen mixture into the engine 103. For this purpose the adjustable outlet valves of the storage unit 105 are opened by the control module 108, as a result of which stored oxygen and hydrogen are delivered to the inlets of the self-adjusting fuel feeder 106 and mixed. The mixture of hydrogen and oxygen (also referred to as HHO gas in this description) is formed in the fuel feeder 106 in order to be delivered to the engine 103. The fuel feeder 106 is in the form of a mixer tank which, in a preferred embodiment, may be heated by a pipe coil 146 through which flows hot steam from the main exhaust duct 130 of the engine, the steam being a product of HHO gas combustion. The use of the pipe coil preferably makes it possible to obtain higher kinetic energy of HHO gas and, by means of compression to an optimal pressure value, the consumption of HHO by the engine 103 can be reduced. In a preferred embodiment, a cool engine 103 may also receive, in the course of starting thereof, artificially (electrically) heated HHO mixture by means of electric heaters mounted in the pipe coil 146 of the feeder 106.

The control module 108 delivers another control signal in order to open the adjustable valve (e.g. a solenoid valve) in the fuel feeder 106, and HHO gas formed in the fuel feeder 106 as a result of mixing hydrogen with oxygen is forced through a suitable path into the chambers of the engine 103 in order to cause regular operation of the engine 103, whereas the electric generator 112 driven by the shaft of the engine 103 is switched by the control module 108 into a mode for producing electrical energy and delivers power outside via the high voltage substation 110 controlled by the control module 108. The control module 108 controls the operation of the generator 112 and "smoothly desynchronizes" the generator 112 while switching off the engine in order to safely disconnect it from the network.

The control module 108 used in the present invention to control the operation of the system 100 may be implemented as any device which, based on a specially prepared set of instructions, e.g. in the form of a program code, sends control commands to individual components of the system 100. For example, the control module may be any device equipped with a memory for storing instructions, a processor connected to the memory and reading instructions therefrom, and a set of inputs and/or outputs, controlled by the processor, for sending and/or receiving control signals. The following may be used, for example, as a control module: a dedicated device, a suitably programmed microcontroller or a PC, but without limitation to the specified examples.

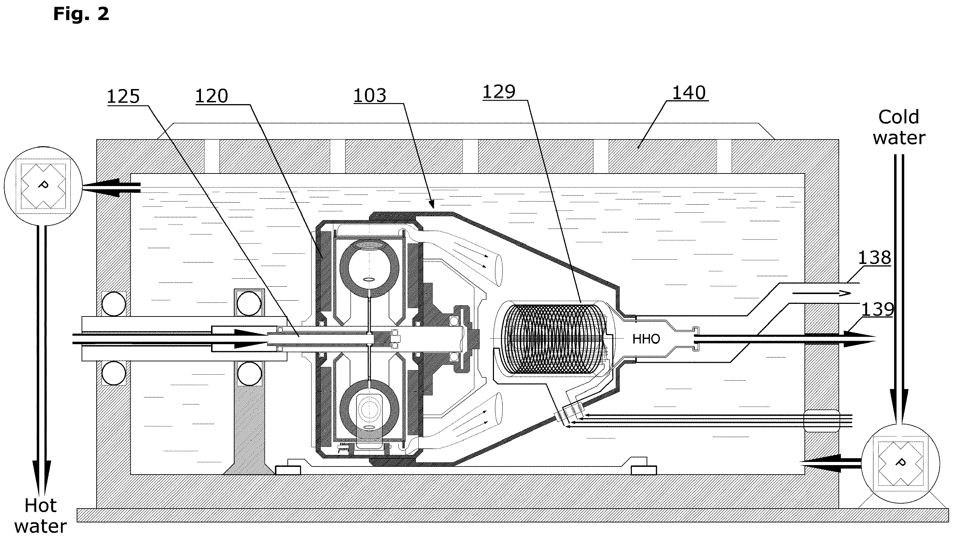

Fig. 2 presents an engine 103, which according to the preferred embodiment may be located inside a water container 140 with forced circulation of water. In preferred embodiment, presented herein, the engine 103 is lubricated and cooled by forced circulation water by means of own pumps. The main engine body 120 is entirely immersed in the water container 140 in which water circulation is forced by means of external pumps in such a way that a hot water outlet is located on one side of the water container 140 and a cold water outlet is located on the other side. Immersing the engine in water protects the construction from overheating, additionally seals operating nodes and prevents excessive noise emission. The water container 140 has a suitable sealed inlet on one side via which HHO gas is introduced into the engine through the main distribution duct 125 provided in the shaft of the engine 103. On the other side of the water container 140, there are provided two sealed outlets which are used to separately lead, respectively, a pipe 138 for the exhaust of steam from the engine 103, and a pipe 139 for the exhaust of HHO from the converter 129. Detailed information concerning the converter 129 will be presented in the following sections of the description.

The main water container 113 of an adequate volume (presented in Fig. 1) supplies and discharges, by means of a pump, a coolant to and from the water container 140 in which the engine 103 together with the electric generator 112 is immersed. Hot water returning from the water container 140 flows through a duct 114 which receives heat. The heat from the duct 114, obtained as a result of cooling the power station (103, 112), may be used to heat objects in the area of or in the vicinity of the system 100. The operation of the cooling system is controlled by the control module 108 via the ECU (Electronic Control Unit) 119 which adjusts the operation of pumps. The ECU 119 may also be used to control the operation of the engine 103. The function of the ECU in the system 100 is to deliver suitably prepared executive signals to the components of the system 100, e.g. by amplifying them. The ECU 119 may be equipped with adequate elements (such as amplifiers, logic gates, inverters, timing circuits, signal generators, etc.) and cooperates directly with the control module 108. Additionally, the ECU may be also used to control other components of the system, e.g. opening the adjustable valves of the system 100, starting the engine, etc., when it is necessary to deliver signals of higher power.

As shown in Fig. 1, obtained in the process of HHO gas combustion chemically pure steam is discharged from the engine 103 through the pipe 138 for discharging the steam, returns after cooling to liquid state to the electrolyser 102 via the inlet 102C in order to be reprocessed into hydrogen and oxygen. In this way, the system 100 prevents the water used to produce HHO gas from being exhausted. The system 100 is closed and looped.

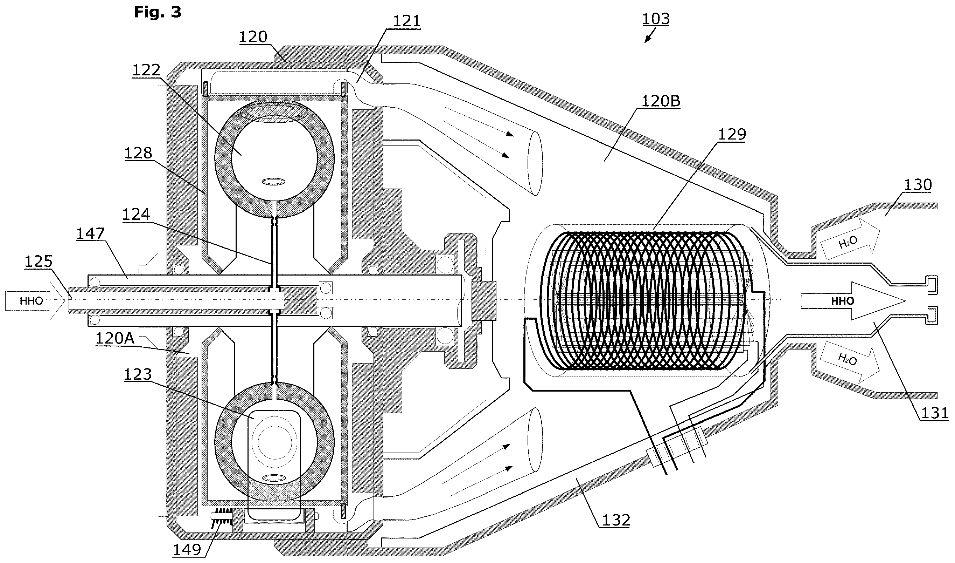

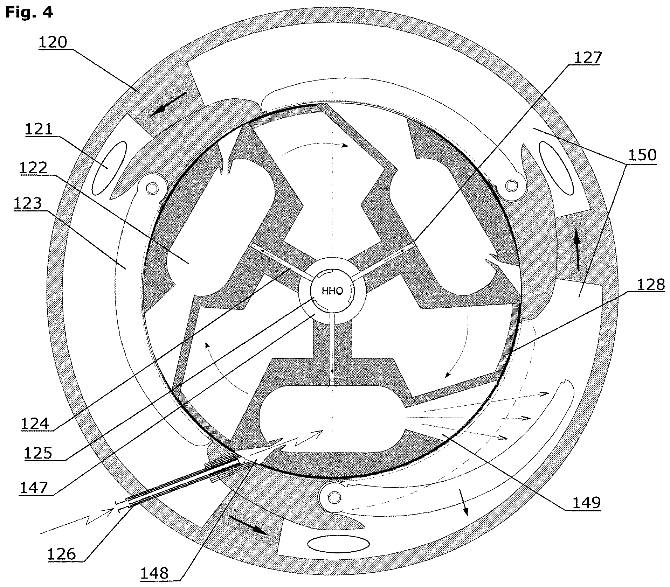

Figs. 3 and 4 show a detailed construction of the engine 103, as a partial longitudinal section and a cross section thereof, respectively. The main external body 120 of the engine 103 comprises two chambers, a first chamber 120A in which a rotor 128 connected to the main shaft 147 of the engine is arranged, and a second chamber 120B equipped with a ceramic casing 132 to which steam resulting from the combustion of HHO gas is discharged by means of ducts 121. The rotor 128 has three combustion chambers 122 evenly disposed around the engine shaft 147. Each combustion chamber 122 is in fluid connection with the main distribution duct 125 via a section fuel duct 124 supplying the hydrogen-and-oxygen mixture to the chambers 122 and equipped with a ball valve 127 which is opened by gas flowing to the combustion chamber 122 and prevents backflow to the main distribution duct 125, i.e. it closes during an explosion in the chamber 122. Moreover, each combustion chamber 122 has an ignition duct 148 and an exhaust duct 149 extending to the perimeter of the rotor 128, which are disposed in opposite directions relative to each other. In the main engine body 120 there is provided a magneto 126 for initiating the operation of the engine by initially igniting the hydrogen-and-oxygen mixture in the chamber 122 in the first cycle of operation, directly through the ignition duct 148. The main engine body 120 comprises three cavities 150 disposed around the rotor 128, each cavity corresponding to one of the three combustion chambers 122 and being separated from the rotor 128 by means of a flap valve 123 which opens into the cavity 150. Each of the cavities 150 is connected with the neighbouring cavity 150 and with the second chamber 120B of the body via a steam discharging duct 121. The second chamber 120B of the body comprises a main exhaust duct 130 for discharging steam outside the engine 103. The body and parts of the engine 103 may be made of any suitable materials used for the construction of engines, such as steel, metal alloys comprising e.g. nickel-titanium alloys, nickel-tungsten alloys, etc., without limitation to the mentioned materials.

Following a signal coming from the ECU 109, a small volume of HHO is pumped into the engine chambers 122 and ignited by a magneto 126. After a single ignition of the charge the first ignition cycle starts subsequent cycles without the participation of a fuel jet with the magneto 126. Hydrogen with oxygen is forced under pressure by a set composed of the main distribution duct 125 consisting of a pipe located inside the central engine shaft, and section fuel ducts 124. The main fuel distribution duct 125 is connected by means of a conduit with the outlet of the fuel feeder 106 from which HHO gas is provided.

The hydrogen-and-oxygen based rotary jet engine 103 operates based on the jet force of steam being a product of hydrogen combustion in oxygen in a closed and self-repeatable cycle due to the special combustion chamber 122 which is similar in construction to a typical rocket engine. The closed and self-repeatable cycle of hydrogen combustion in chemically pure oxygen is the effect of delivering part of the energy of the flame from the combustion of the initial charge in the first of the chambers 122. Displacement of the rotor 128 by an angle of 7° (clockwise) during the opening of the flap valve 123 causes self-ignition of the charge in the next chamber. Due to negative pressure that cyclically occurs in chambers 122 as a result of jet force after combustion of the charge, the hydrogen-and-oxygen mixture is sucked in in an automatic and self-repeatable manner. When the chamber is being filled with the flammable hydrogen-and-oxygen mixture, the jet nozzle of the chamber 122 is covered by the flap valve 123 in order to seal it. The flap valve remains in the closed position due to the use of a resilient element 149 (for example a spring) and is opened by an explosion in the combustion chamber 122. The jet force of steam from the combustion chamber 122 arranged with a suitably selected radius causes circular motion. Through 360 degrees of rotation of the shaft with the rotor, there are three subsequent combustion cycles of an explosive nature. The resultant torque will be increased by the inertial force of the rotor mass, the potential energy of which will be changed into the kinetic energy of the centrifugal force.

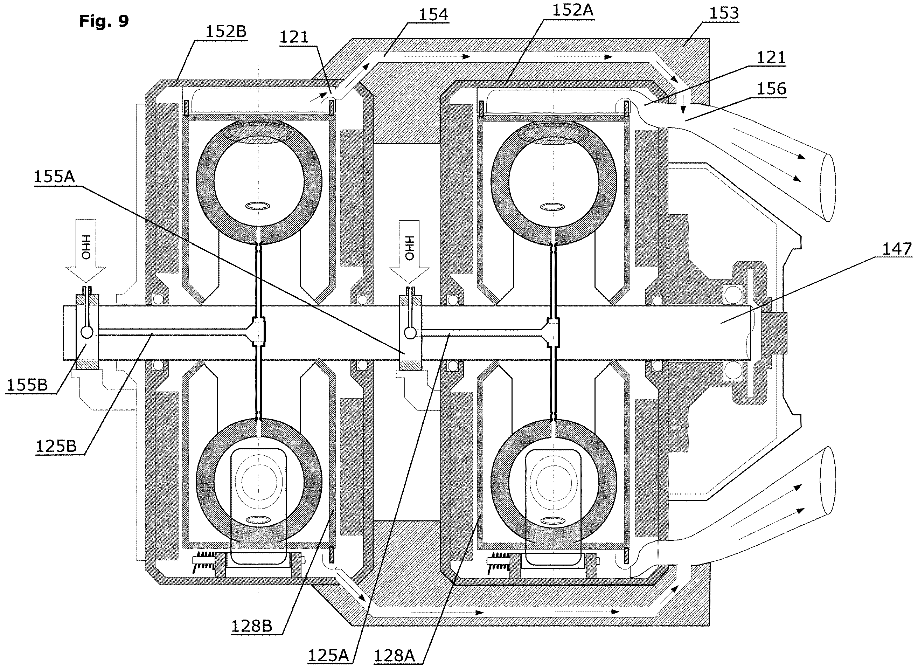

In order to obtain high power, the engine 103 may be constructed of a plurality of similar rotors 128. The use of a higher number of rotors will be described in relation to Fig. 9 in the description below.

Although in the embodiment presented herein the engine 103 comprises three combustion chambers and operates in a three-cycle mode, the hydrogen-and-oxygen rotary jet engine according to the invention is not limited to the indicated construction and may also comprise a different number of chambers and their corresponding constructional elements based on the same operating principle.

In the embodiment presented herein, the system 100 is preferably equipped with an autonomous system for producing hydrogen and oxygen from steam, composed of a high-voltage induction H₂0/HHO converter 129 (hereafter also referred to as the converter 129) and a separator 104 capturing and separating hydrogen and oxygen. The autonomous system for the production of hydrogen and oxygen from steam is a preferred enhancement of the system 100 since it enables to partially recover hydrogen and oxygen from steam and thus the efficiency of the system is increased and the load of the electrolyser 102 is reduced.

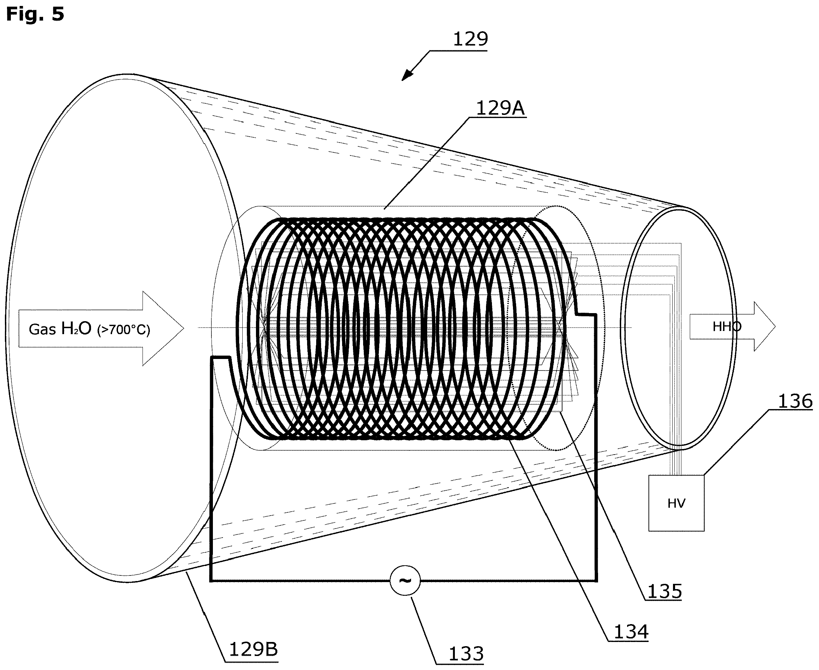

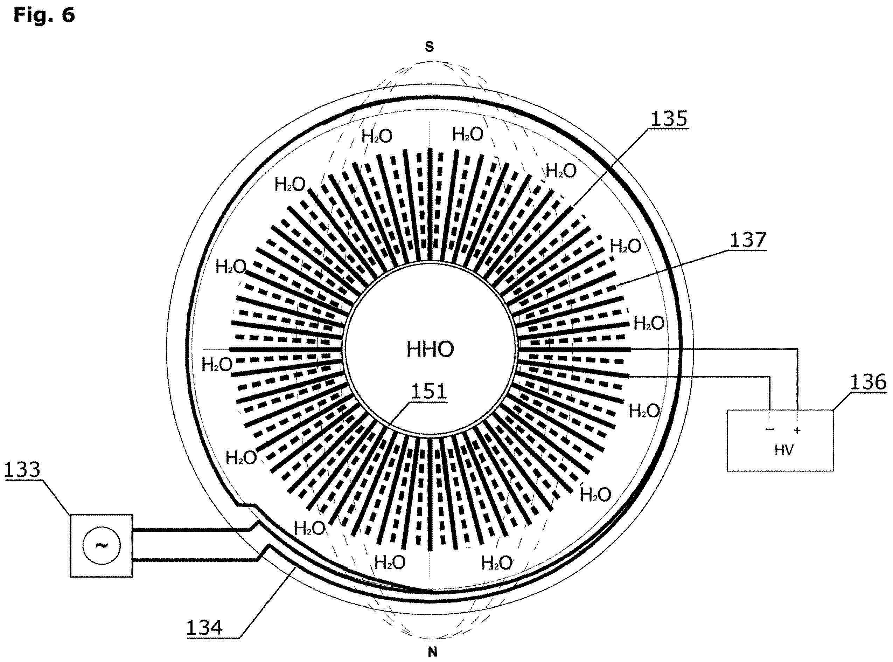

The converter 129 is presented in more detail in Fig. 5 and Fig. 6. The converter 129 uses thermal condensation of steam, which spontaneously decomposes into oxygen and hydrogen. Such decomposition is facilitated by thermal energy from the combustion process (> 700°C) and the energy of the high voltage from the voltage source 136 on positive(+)/negative (-) electrodes 135 separated by a ceramic insulator 137, which electrodes ionize the steam in a strong magnetic field of the induction coil 134 powered from the alternating voltage source 133. The induction coil 134 produces alternating magnetic field which pulsates with the resonance frequency of H₂O steam, preferably with vibrations induced by the rotary movement of the rotor 128. As a result, the energy of the magnetic field causes rapid molecular decomposition of hydrogen bonds with oxygen. A signal reflecting the rotation frequency of the engine 103 may be taken from a sensor on the drive shaft and processed into voltage of a suitable frequency which powers the coil 134.

The construction of the converter 129 according to the presented embodiment is similar to a cone with truncated apex, wherein the ratio of base (inlet) to outlet is 4:1. The casing 129B of the converter is made of a ceramic material covered with a thick-walled jacket made of e.g. stainless steel. To ensure better resistance to high pressure, the casing 129B of the converter may be reinforced with a wire mesh made of e.g. tungsten-nickel alloy. As shown in Fig. 3, overheated steam being a product of the HHO gas combustion in the engine 103 flows under a considerable pressure through the duct 121 and fills the second chamber 120B of the main engine body 120 cased in a ceramic casing 132 (in this embodiment, the engine casing 132 constitutes also the casing 129B of the converter 129 located in the second chamber 120B of the main engine body 120). Due to the decreasing cross section of the casing 129B towards the outlet, both the temperature of steam and its pressure increases. Due to the operation of electrical circuits in the hollow cylinder 129A of the converter in the form of a pipe made e.g. of metal alloys, such as nickel-copper-tungsten alloy, the gases: hydrogen and oxygen are separated from steam. The pressure of the gases in high enough to force an excessive volume of steam, which is heavier than the HHO mixture, towards the outside casing 129B. The HHO mixture has a considerably higher kinetic energy that the overheated steam, since HHO is capable of being heated to temperatures approximating 7000° C, whereas steam may reach the maximum of 700° C. Steam will also appear in the converter cylinder 129A but the high voltage of the electrodes 135 and strongly concentrated magnetic field of the coil 134 will cause decomposition of steam into oxygen and hydrogen (HHO). Depending on the efficiency of electrical circuits, 25 - 30% of steam is decomposed. The remaining steam is forced out of the converter cylinder 129A by the flow of gases which have a greater linear speed and smaller mass thanks to kinetic energy being many times greater and the fact that the gases cannot recombine to produce water due to excessive temperature. The electrodes 135 of the high voltage circuits form a parallel circuit. They are mounted on an inner openwork ceramic cylinder 151 mounted inside the converter 129, and between the electrodes 135 there are arranged ceramic separators 137 preventing the occurrence of overvoltage and sparking. Due to the excessive temperature > 700⁰ C oxygen loses its magnetic properties and "does not stick to the electrodes". The induction coil 134 with the high-voltage electrodes 135 concentrate gases inside the converter cylinder 129A, and separated steam escapes through the main steam exhaust duct 130. The negative electrodes (-) in the embodiment presented herein are made in the form of 1 mm thick high-gloss polished plates made of nickel-copper alloy. The positive electrodes (+) are made in the form of plates densely perforated with round holes allowing the flow of gas particles. The electrical connection between the electrodes 135 and the source 136 may be carried out, for example, by means of a spiral windings of a wire made of the same material as the electrodes (the so-called short-circuited winding) which are wound in opposite directions. The induction coil 134 in the embodiment is made of a 5 mm wire made, for example, of titanium-nickel alloy and has approximately 100 windings. The windings are provided with insulation of a ceramic material resistant to high temperatures. The windings are spaced from each other at a distance of approx. 2 mm on the whole surface so that the overheated steam can permeate between the windings. The electrodes 135 are mounted in ceramic yokes and are connected together with the central inner perforated ceramic cylinder through which HHO gases flow.

Although in the embodiment presented herein the converter 129 is arranged inside the engine 103 such that the casing 132 and the walls of the second chamber 120B of the engine body also constitute the casing 129B and the outer jacket of the converter 129, respectively, the invention is not limited to this embodiment and, in other variants the converter 129 may also be located outside the engine 103.

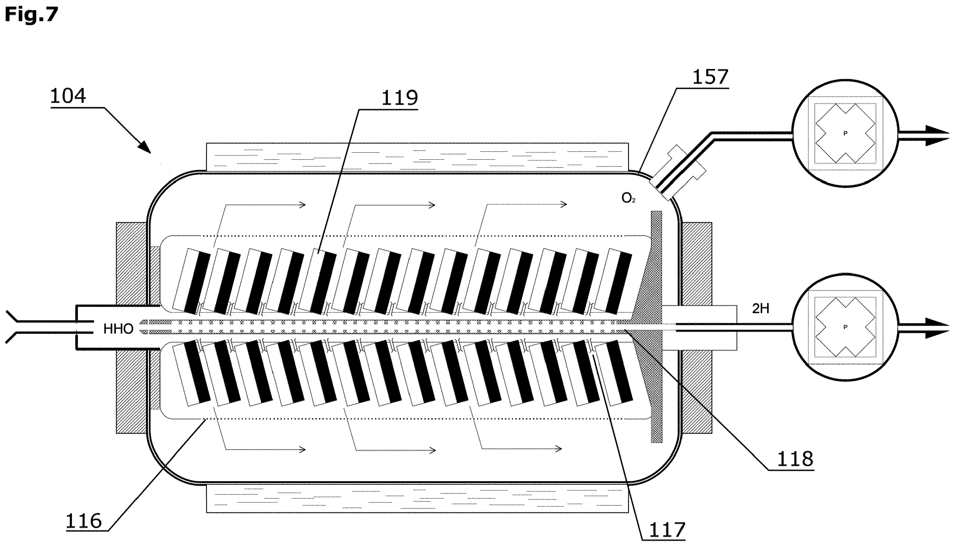

HHO gases sucked out of the converter are delivered to the separator 104 which separates HHO gas into hydrogen and oxygen. Detailed construction of the separator 104 is presented in Fig. 7. The separator 104 comprises a magnetic battery 119 for capturing oxygen from the hydrogen-and-oxygen mixture and a perforated pipe 118 for hydrogen. The magnetic battery 119 consists of a group of strong neodymium magnets of specially selected shapes, with high energy density and magnetic induction value. Due to magnetic properties of oxygen, the magnets effectively separate hydrogen from oxygen. The separated gases find their way through the ducts to the two tanks 105A and 105B. The gases in the tanks 105A and 105B may be additionally compressed to a high pressure value due to heat absorbed from the cooling system 114 of the engine.

The separator 104 comprises a tightly closed cylinder 116 made e.g. from acid-proof stainless steel (or any other construction material which does not react with oxygen and is resistant to high temperatures), placed in a housing 157 with double jacket. The walls of the cylinder 116 are perforated to ensure gas permeability. A coolant (water) flows between the shells of the double jacket. Inside the cylinder 116 (aligned with the axis thereof) there is a hollow openwork pipe 118 made, for example, of nickel-and-copper alloy. The arrangement of holes in the pipe 118 (along its circumference and length) corresponds to the angled position of the strong neodymium magnets forming the so-called magnetic battery 119. In the holes there are mounted vents 117 varying opening diameters, made of e.g. a ferromagnetic alloy covered with chromium. The vents 117 are magnetised by the flux of neodymium magnets mounted on spacing holders around the central pipe 118. Oxygen flows through the holes with vents 117 under the action of attractive force of the magnetic field of the magnets. Oxygen acquires magnetic properties at temperature < 60 °C, therefore the cylinder 116 of the separator must be intensively cooled. Since there is twice as much hydrogen as oxygen and hydrogen is lighter than oxygen, it can be easier sucked out by a vacuum pump. Oxygen, which is heavier and has larger particles, blocks the inflow of hydrogen in the throats of the vents 117. Oxygen is under the action of the magnetic field already at the entrance to the vents 117. There is a difference in pressure between the hydrogen pipe 118 and the chamber with the magnet battery 119 which prevents the gases from being mixed again. The difference in pressure is caused by pumps having different capacities that suck out the gases. In the embodiment presented herein, magnets forming the magnet battery 119 are disposed N/S at an angle of approx. 80° relative to the axis of the pipe 118 and around the pipe 118, but other configurations are also possible. A gap between two magnets corresponds approximately to the outer perimeter of a vent 117. The magnets are mounted in yokes made of an alloy of stainless and nonmagnetic steel.

The use of the H₂O/HHO converter 129 and the separator 104 makes it possible to save about 25% of HHO and reduce the amount of electric energy used to produce H/O in the electrolyser 102.

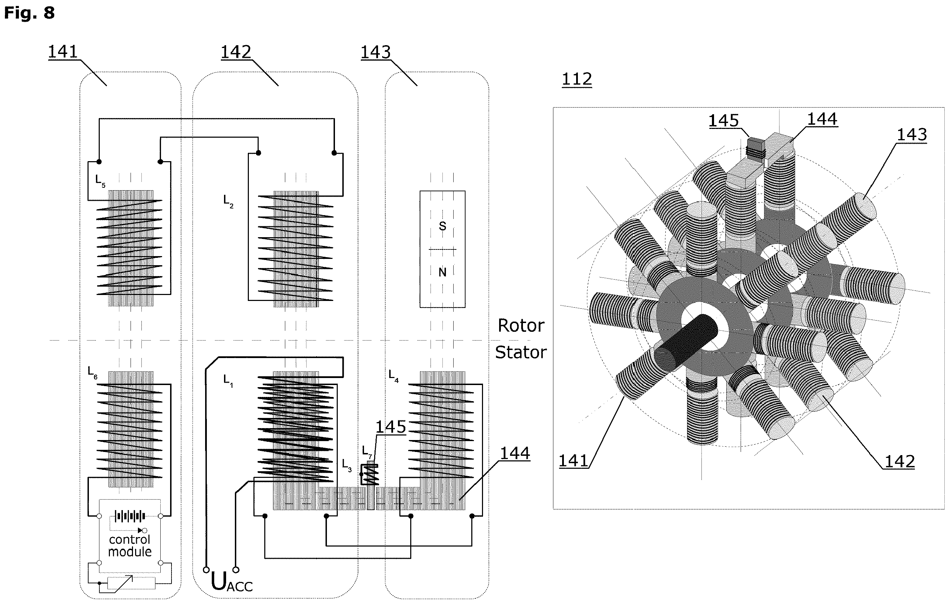

Fig. 8 presents a schematic view of an electric generator 112 specially designed to cooperate with the system 100. The schematic view located in the left part of Fig. 8 presents the construction of the generator 112 which comprises an exciter 141, a main part - an output voltage generator 142, and an ancillary part - a compensating engine 143, wherein the schematic view presents a division of individual parts into a rotor and a stator. The schematic view presents only a section of the electric generator 112, which is fully concentric and symmetrical. The schematic view in the right part of Fig. 8 presents a spatial view illustrating the construction and individual parts of the generator 112.

According to a preferred embodiment presented herein, the electric generator 112 is made as a high-voltage (HV) synchronous generator. Direct electric voltage (DC) applied to the terminals of a stator winding L₆ in the exciter, formed and commutated with f=50Hz by a control unit managed by the control module 108 causes changes in the iron core by electromagnetic induction. Voltage U_{ACC} is induced in a winding L₅ of the rotor which is proportional to changes in the function of generator rotation. Voltage from the winding L₅ directly powers a winding L₂ of the rotor in the main part of the generator 142. Output utilization voltage U_{ACC} is induced in a winding L₁ of the stator in the main part 142. The iron core for the winding L₁ has a bifilar winding L₃ - galvanically isolated from the winding L₁. Alternating voltage for powering a winding L₄ is induced in the winding L₃. An induction flux saturates separated iron cores for the windings L₃ and L₄ with the phase shifted by 10°. On the rotor side, in part 143, there are located alternatively arranged N/S strong neodymium magnets the number of which corresponds to the number of iron pole shoes 144 in the shape of letter C with a gap in which an iron core of a resonance circuit 145 is located, the resonance circuit 145 having a short-circuited coil L₇ with several windings of thick wire. The role of this resonance circuit is to correct the phases of currents flowing in the windings L₁ and L₄, which are shifted by about 10° when the generator load is minimal, whereas in the case of the rated load, the shift is 0°. The role of the compensating engine 143 is to reduce electrodynamic back torque due to the load of the main windings L₁ of the generator caused by external receivers and to fulfil the function of a "starter" of the engine 103. In the presented configuration of the generator 112, a resultant back torque will be reduced by about 35%, which will increase the efficiency of the generator. This means that the mechanical driving power provided may be lowered as much as the back torque of the generator at rated load is reduced.

Although the generator 112 has been illustrated and described as a one-phase generator, a three-phase configuration is also possible.

According to another embodiment, Fig. 9 presents a schematic view of a part of a longitudinal section of a hydrogen-and-oxygen based rotary jet engine in which two rotor modules have been used. Since the engine 103 has been described in detail in relation to Fig. 3, the description of the principle of operation and analogous parts thereof will be omitted here for the sake of clarity. The following description of a two-rotor construction of the engine 103 will thus focus on necessary structural modifications and differences over the engine construction described above. Fig. 9 presents only a part of the engine 103, in which modifications have been made in order to use a higher number of rotors.

Each of the rotors 128A, 128B is connected to a shaft 147 and has the same construction as described in relation to Fig. 3. Moreover, the rotors 128A, 128B have individual housings 152A, 152B, which are connected by means of a cylindrical connector 153 mounted to the main engine body. The connector 153 ensures a suitable arrangement of rotor modules in the engine 103 and has ducts 154 which discharge hot steam from the ducts 121 of each of the housings 152B of additional rotors to the collector 156. As a result of use of the connector 153 steam from the combustion chambers of the first rotor 128A (i.e. the rotor located nearest to the second chamber 120B of the engine body), as well as from the combustion chambers of the additional rotor 128B (and possibly from each subsequent rotor) will be led out to the second chamber 120B of the engine body by means of a common exhaust collector 156, whose size ensures sufficient total flow.

When a plurality of rotors is used, then in order to ensure even supply of the hydrogen-and-oxygen mixture to the combustion chamber of each the rotors 128A, 128B, the engine shaft 147 has a main distribution duct divided into separate sections 125A, 125B of the main distribution duct (sections 125A, 125B are physically separated from one another so that there is no flow of gas between them), wherein each section 125A, 125B supplies the hydrogen-and-oxygen mixture to section fuel ducts of individual rotors 128A, 128B in the same way as described above in relation to Figs 3 and 4. The hydrogen-and-oxygen mixture from the fuel feeder 106 is supplied to each section 125A, 125B by separate conduits separated from the main conduit supplying HHO mixture and connected to gas pipe joints 155A, 155B. Gas pipe joints 155A, 155B are provided for each of the rotors 128A, 128B (in the case a plurality of rotors are used, gas pipe joints are located on the shaft 147 in the spaces between individual housings) and they are fixed, for example, they are supported using a support (as schematically illustrated in Fig. 9) which may be mounted to the engine body for this purpose. As a result, the gas pipe joints 155A, 155B remain fixed and do not rotate together with the shaft 147. Gas pipe joints 155A, 155B are in the shape of a sleeve with a side inlet for supplying HHO mixture and inside them there are provided thrust cylinder bearings with sealing at the place of contact with the shaft 147 to ensure cooperation with the rotating shaft 147. On the shaft 147, under the gas pipe joints 155A, 155B there are provided holes through which gases supplied to the gas pipe joints 155A, 155B flow to individual sections 125A, 125B. The number and dimensions of said holes in the shaft 47, as well as the angle at which they are made, may be selected depending on the desired gas flow, taking into account *inter alia* the cross section area of sections 125A, 125B. For example, under the gas pipe joint there can be made three holes of the total cross-section area equal to the cross section area of sections 125A, 125B, and the angle of the holes may be e.g. 30° such that the rotating shaft "takes" the gas into sections 125A, 125B. Other combinations of the number, dimensions and angle of said holes will be obvious for the person skilled in the art. The skilled person will also notice that in the case where a plurality of rotors 128A, 128B is used, it is preferable that the holes are arranged on the shaft 147 in a way that ensures an even distribution of the moments of force generated by jet force energy. For example, with a single rotor 128A having three combustion chambers, HHO gas fills the chambers and is burnt at every 120° of the rotation of the shaft 147, thus in the case of two rotors is it preferable when the arrangement of holes in the shaft 147 is such that the HHO gas is filled and burnt in the combustion chambers of the rotors in an alternating manner, which means, for example, at every 60° of the shaft rotation.

The above-described modular multi-rotor construction makes it possible to expand the engine by further rotors and thus increase its power. Therefore, despite the fact that the embodiment presented above describes the use of two rotors 128A, 128B, it is also possible to use a higher number of rotors using the presented solutions.

The hydrogen-based system 100 for storing and recovering electrical energy with a power station driven by the hydrogen-and-oxygen based rotary jet engine according to the present invention may be built in the form of an independent power plant or it may be incorporated in the existing unit. In a preferred embodiment, the system 100 is located in a specially built concrete silo having a light roof. The light roof is provided for safety reasons. All main parts of the system may also have light upper covering. In case of failure (explosion of HHO), the front of the flame and thermal energy of the shock wave will be directed upwards thanks to strong walls of concrete and light roofing to prevent significant damage in the environment. The area occupied by the system installations is not large and, proportionally to the main object (the power unit), it does not occupy more than 25% of the total area of this unit.

The hydrogen based system 100 for storing and recovering electrical energy with a power station should be used, first of all, to prevent the effects of power network overload. It is a safe and high-efficient store of electrical energy converted into hydrogen and ready to be used immediately. The system equipped with the hydrogen-and-oxygen based rotary jet engine does not emit any pollution. It does not absorb oxygen from the atmosphere and it does not exhaust any products of its operations, apart from usable energy. Considering the fact that the installation is fully scalable, it is possible to use the system in power plants having capacity from 0,5MW even to 100MW. The system may be used as end power unit - permanently connected to a network - on a wind farm or a photovoltaic power plant. Such farms provide the system with electrical energy necessary to produce a hydrogen-and-oxygen mixture (HHO) and when they are inoperative for natural reasons, the system can produce and transmit energy to the network, irrespective of the reasons that have stopped the operation of the farms, thanks to reverse conversion - hydrogen combustion in oxygen to produce electrical energy.

The hydrogen-and-oxygen based engine applied in the system together with a part of the equipment thereof may be independently used as a drive in means of air, land and marine transport.

## Claims

1. A hydrogen based system (100) for storing and recovering energy comprising:
a) an electrolyser (102) for the production of hydrogen and oxygen as a result of water electrolysis, comprising separate outlets (102A, 102B) for hydrogen and oxygen, respectively, and an inlet (102C) for the supply of water; wherein the electrolyser (102) is powered from an external source (101) of electrical energy, the energy from which is to be stored;
b) a storage unit (105) comprising two separate tanks (105A, 105B) for hydrogen and oxygen, respectively, wherein hydrogen and oxygen are separately supplied from the outlets (102A, 102B) of the electrolyser to the tanks (105A, 105B) by means of ducts equipped with pumps (107), wherein the tanks (105A, 105B) have inlets and outlets equipped with adjustable valves;
c) a fuel feeder (106) for the production of a hydrogen-and-oxygen mixture, the fuel feeder being a tank having inlets in fluid connection with the outlets of the tanks (105A, 105B), and an outlet equipped with an adjustable valve;
d) a hydrogen-and-oxygen based rotary jet engine (103) comprising:
- a main engine body (120) comprising a first chamber (120A) of the engine body and a second chamber (120B) of the engine body;
- a main engine shaft (147) extending through the first chamber (120A) of the body;
- a rotor (128) connected to the main engine shaft (147) and arranged inside the first chamber (102A) of the body,
wherein:
- the rotor (128) has a plurality of combustion chambers (122) evenly disposed around the engine shaft (147);
- in the main engine shaft (147) a main distribution duct (125) is hollowed out by means of which the hydrogen-and-oxygen mixture is supplied;
- each combustion chamber (122) is in fluid connection with the main distribution duct (125) by means of a section fuel duct (124) supplying the hydrogen-and-oxygen mixture to the chambers (122) and equipped with a ball valve (127) that prevents backflow to the main distribution duct (125);
- each combustion chamber (122) has an ignition duct (147) and an exhaust duct (149) extending to the perimeter of the rotor (128), which ducts are disposed in opposite directions relative to each other;
- in the main engine body (120) there is provided a magneto (126) for initiating the operation of the engine by initially igniting the hydrogen-and-oxygen mixture in the chamber (122) in the first cycle of operation, directly through the ignition duct (148);
- the main engine body (120) has cavities (150) disposed around the rotor (128), each cavity corresponding to one combustion chamber (122) and being separated from the rotor (128) by means of a flap valve (123) which is held in a closed position by a resilient element (149), wherein the flap valve (123) opens into the cavity (150) as a result of an explosion in the combustion chamber (122) and a jet of steam from the exhaust duct (149), and it directs the steam in a direction opposite to the direction of the resultant rotation of the rotor (128); wherein each of the cavities (150) is connected to the neighbouring cavities (150) and is connected with the second chamber (120B) of the body via a steam discharging duct (121);
wherein the cavities (150) are adapted such that, when the flap valve (123) opens and the rotor (128) rotates, part of the energy of the flame appearing in the combustion chamber (122) flows, through the cavity (150), between the exhaust duct (149) of one of the combustion chambers (122) and the ignition duct (148) of the next combustion chamber, causing self-operating and cyclic ignition of the hydrogen-and-oxygen mixture in each subsequent combustion chamber (122) as the rotor (128) rotates, wherein the steam is discharged through the steam discharging duct (121);
wherein the second chamber (120B) of the body has a main exhaust duct (130) discharging steam out of the engine (103);
wherein the main distribution duct (125) of the engine (103) is connected by means of a conduit with the outlet of the fuel feeder (106) in order to supply the hydrogen-and-oxygen mixture,
wherein hot steam produced as a result of hydrogen combustion in oxygen in the engine (103) is discharged from the main exhaust duct (130) and, having been cooled, is supplied through a conduit to the inlet (102C) of the electrolyser, as a result of which the system (100) forms a closed circuit,
e) an electric generator (112) coupled with a rotary shaft of the engine (103) for generating electrical energy as a result of the operation of the engine (103), said electrical energy being electrical energy recovered from the system (100),
f) a control module (108) which controls the operation of the system (100), including the control of power supply to the electrolyser (102), the operation of the pumps of the system (100), the operation of the electric generator (112), and controls the adjustable valves of the fuel feeder (106A) and of the tanks (105A, 105B);
g) an electronic control unit (ECU) (109) coupled with the control module (108) for controlling the operation of the engine and for conditioning control signals supplied to the system components;

2. The system (100) according to claim 1 wherein the rotor (128) of the engine (103) has three combustion chambers (122) and operates in a three-cycle mode.

3. The system (100) according to any of the preceding claims wherein, in the first body chamber (120A), the engine (103) has one or more additional rotors (128B) having an identical structure and connected to the shaft (147),
wherein each of the rotors (128A, 128B) has a separate housing (152A, 152B),
wherein the rotor housings (152A, 152B) are spaced apart from one another and are supported by means of a connector (153) mounted to the main engine body,
wherein individual ducts (121) of the housing of the first rotor (128A) and their corresponding ducts (121) of the housings (152B) of the one or more additional rotors (128B) are connected to the exhaust collectors (156) routing hot steam to the second chamber (120B) of the engine body, wherein the ducts (121) of the housings (152B) of the one or more additional rotors (128B) are connected with the exhaust collectors (156) by means of ducts formed in the connector (153),
wherein the main distribution duct (125) is divided into separate sections (125A, 125B) of the main distribution duct, each section corresponding to the individual rotor (128A, 128B), wherein each section (125A, 125B) of the main distribution duct is connected with individual conduits separated from the main duct supplying the hydrogen-and-oxygen mixture by means of fixed gas pipe joints (155A, 155B) with a side inlet situated on the shaft (147) in the spaces between the housings (152A, 152B),
wherein the gas pipe joints (155A, 155B) are in the shape of a sleeve and are equipped with thrust cylinder bearings with leak stoppers provided at the place of contact with the shaft (147), wherein the shaft (147) is provided with holes under the gas pipe joints (155A, 155B) so as to enable the flow of gas from the gas pipe joints (155A, 155B) to the corresponding sections (125A, 125B) of the main distribution duct.

4. The system (100) according to any of the preceding claims wherein the engine (103) is located inside a water container (104) and is immersed in water to ensure cooling and lubrication of the engine, wherein the water container (104) has forced water circulation with an external cooling system (114).

5. The system (100) according to any of the preceding claims wherein the fuel feeder (106) is equipped with a pipe coil (146) for heating the fuel feeder (106) in order to compress the hydrogen-and-oxygen mixture contained therein, the pipe coil (146) being incorporated in the conduit connecting the main exhaust duct (130) discharging hot steam from the engine (103) and the inlet (102C) of the electrolyser (102).

6. The system (100) according to claim 5 wherein the pipe coil (146) is equipped with an electric heater for initially heating the fuel feeder (106).

7. The system (100) according to any of the preceding claims further comprising a system for recovering oxygen and hydrogen from steam, comprising:
- a high-voltage induction converter (129) for converting hot steam into oxygen-and-hydrogen mixture, the converter comprising:
- a cone-shaped ceramic casing (129B) having an outer strengthening jacket, wherein the casing (129B) has an inlet and an outlet, wherein the inlet is designed for supplying hot steam from the engine (103), wherein the casing (129B) tapers towards the outlet,
- a hollow cylinder (129A) of the converter coaxially arranged inside the casing (129B), wherein the outlet of the hollow cylinder (129A) for discharging the oxygen-and-hydrogen mixture recovered from steam is separated by means of an outlet nozzle (131) from the outlet of the casing (129B) for discharging the remaining steam;
- an induction coil (134) with ceramic insulation, arranged inside the hollow cylinder (129A) and powered from an external alternating voltage source (133), wherein spaces are provided between the windings of the induction coil (134) to enable the flow of steam;
- a set of electrodes (135) arranged inside the induction coil (134), the set of electrodes (135) being in the form of a plurality of metal plates radially mounted on a hollow ceramic openwork cylinder (151) and separated by means of ceramic insulators (137), wherein the ceramic cylinder (151) is placed in the axis of the induction coil (134), and neighbouring electrodes (135) form pairs of positive electrodes and perforated negative electrodes, and each pair of the electrodes is electrically connected with a high voltage power source (136) in a parallel circuit;
- a separator (104) for separating the hydrogen-and-oxygen mixture from the converter (129) into hydrogen and oxygen, wherein an inlet of the separator (104) is connected with the exhaust nozzle (131) of the hollow cylinder (129A) of the converter (129) by means of a conduit equipped with a cooler (115) for supplying the oxygen-and-hydrogen mixture to the separator (104), wherein the separator (104) comprises:
- a housing (157) in the form of a double, cooled jacket, which has a inlet for supplying the hydrogen-and-oxygen mixture and a first and second outlet for discharging the separated gases, hydrogen and oxygen, respectively,
- a hollow cylinder (116) having permeable walls which is coaxially arranged in the housing (157), wherein space is provided between the hollow cylinder (116) and the housing (155) for discharging separated oxygen, the space being connected with the second outlet of the housing (150) for discharging oxygen.
- a hollow metal pipe (118) having a plurality of holes which is coaxially arranged inside the hollow cylinder (116), wherein one end of the pipe (118) is connected with the inlet of the separator (104), and the other end is connected with the first outlet of the housing (157) for discharging hydrogen after separating oxygen,
- a series of magnets forming a battery (119) of magnets, which are sequentially located N/S around the pipe (118) on spacing holders made of non-magnetic material and which magnets are used for attracting oxygen particles;
- vents (117) having varying opening diameters, made of ferromagnetic material and arranged in said plurality of holes in the pipe (118) between the magnets; wherein the vents (117) are magnetized with a flux of magnet field such that they capture oxygen particles from the flowing hydrogen-and-oxygen mixture and lead them out of the pipe (118) to the hollow cylinder (116) from which oxygen flows to the space between the hollow cylinder (116) and the housing (150),
conduits connecting the first and second outlets of the separator (104) with the inlets of the tanks for hydrogen and oxygen (105A, 105B), respectively, wherein the conduits are equipped with pumps enforcing flow of the gases to the tanks (105A, 105B).

8. The system (100) according to claim 7, wherein the converter (129) is located in the second chamber (120B) of the body of the engine (103), wherein the casing (132) and walls of the second chamber (120B) of the body of the engine (103) form the casing (129B) and the jacket of the converter (129) respectively, and the outlet nozzle (131) constitutes the outlet of the second chamber (120B) of the engine (103).

9. The system (100) according to any of the preceding claims wherein the electric generator (112) is a high voltage generator which comprises the following component parts arranged in a concentric and symmetrical manner:
- an exciter (141) comprising a core with a winding (L₅) on the rotor side, and a core with a winding (L₆) on the stator side, wherein constant voltage controlled by the control module (108) is applied to the terminals of the winding (L₆) on the stator side;
- an output voltage generator (142) comprising a core with a winding (L₂) on the rotor side, and a core with a winding (L₁) for generating utilization voltage (U_{ACC}) and with a bifilar winding (L₃) galvanically separated from the winding (L₁) on the stator side, wherein the terminals of the winding (L₂) on the rotor side are electrically connected with the terminals of the winding (L₅) of the exciter (141) on the rotor side;
- a compensating engine (143) comprising neodymium magnets disposed alternately N/S on the rotor side, and a core with a winding (L₄) on the stator side, wherein the terminals of the winding (L₃) of the output voltage generator (142) on the stator side are electrically connected with the terminals of the winding (L₄) of the compensating engine (143) on the stator side; wherein the cores of the output voltage generator (142) and of the compensating engine (143) on the stator side are short-circuited and form a pole shoe (143) in the shape of letter C with a gap in which a core with a wound and short-circuited winding (L₇) is located, the core forming a resonance circuit (145) for correcting the phase of currents flowing in the windings (L₁, L₄) of the output voltage generator (142) and of the compensating engine (143) on the stator side.

10. The system (100) according to any of the preceding claims wherein the external source of electrical energy (101) is an alternating voltage source, and the electrolyser is powered from the source (101) by means of a rectifier unit (111).

11. The system (100) according to claim 10 wherein electrical energy is drawn to the system (100) from the external source of electrical energy (101) through a high voltage network (HVN) and is recovered to it from the electric generator (112) by means of a high-voltage substation (VSD) controlled by the control module (108).

12. The system (100) according to any of the preceding claims wherein the system (100) is located in a concrete silo covered with a roof.

13. A hydrogen-and-oxygen based rotary jet engine (103) for use in the system (100) according to any one of claims 1-12, comprising:
- a main engine body (120) comprising a first chamber (120A) of the engine body and a second chamber (120B) of the engine body;
- a main engine shaft (147) extending through the first chamber (120A) of the body;
- a rotor (128) connected to the main engine shaft (147) and arranged inside the first chamber (102A) of the body,
wherein:
- the rotor (128) has a plurality of combustion chambers (122), evenly disposed around the engine shaft (147);
- in the main engine shaft (147) a main distribution duct (125) is hollowed out by means of which the hydrogen-and-oxygen mixture is supplied;
- each combustion chamber (122) is in fluid connection with the main distribution duct (125) by means of a section fuel duct (124), supplying the hydrogen-and-oxygen mixture to the chambers (122) and equipped with a ball valve (127) that prevents backflow to the main distribution duct (125);
- each combustion chamber (122) has an ignition duct (147) and an exhaust duct (149) extending to the perimeter of the rotor (128), which ducts are disposed in opposite directions relative to each other;
- in the main engine body (120) there is provided a magneto (126) for initiating the operation of the engine by initially igniting the hydrogen-and-oxygen mixture in the chamber (122) in the first cycle of operation, directly through the ignition duct (148);
- the main engine body (120) has cavities (150) disposed around the rotor (128), each cavity corresponding to one combustion chamber (122) and being separated from the rotor (128) by means of a flap valve (123) which is held in a closed position by a resilient element (159), wherein the flap valve (123) opens into the cavity (150) as a result of an explosion in the combustion chamber (122) and a jet of steam from the exhaust duct (149), and it directs the steam in a direction opposite to the direction of the resultant rotation of the rotor (128); wherein each of the cavities (150) is connected to the neighbouring cavities (150) and is connected with the second chamber (120B) of the body via a steam discharging duct (121);
wherein the cavities (150) are adapted such that, when the flap valve (123) opens and the rotor (128) rotates, part of the energy of the flame appearing in the combustion chamber (122) flows, through the cavity (150), between the exhaust duct (149) of one of the combustion chambers (122) and the ignition duct (148) of the next combustion chamber, causing self-operating and cyclic ignition of the hydrogen-and-oxygen mixture in each subsequent combustion chamber (122) as the rotor (128) rotates, wherein the steam is discharged through the steam discharging duct (121);
wherein the second chamber (120B) of the body has a main exhaust duct (130) discharging steam out of the engine (103);

14. The engine (103) according to claim 13 wherein the rotor (128) of the engine (103) has three combustion chambers (122) and operates in a three-cycle mode.

15. The engine (100) according to claim 13 or 14 wherein, in the first body chamber (120A), the engine (103) has one or more additional rotors (128B) having an identical structure and connected to the shaft (147),
wherein each of the rotors (128A, 128B) has a separate housing (152A, 152B),
wherein the rotor housings (152A, 152B) are spaced apart from one another and are supported by means of a connector (153) mounted to the main engine body,
wherein individual ducts (121) of the housing of the first rotor (128A) and their corresponding ducts (121) of the housings (152B) of the one or more additional rotors (128B) are connected to the exhaust collectors (156) routing hot steam to the second chamber (120B) of the engine body, wherein the ducts (121) of the housings (152B) of the one or more additional rotors (128B) are connected with the exhaust collectors (156) by means of ducts formed in the connector (153),
wherein the main distribution duct (125) is divided into separate sections (125A, 125B) of the main distribution duct, each section corresponding to the individual rotor (128A, 128B), wherein each section (125A, 125B) of the main distribution duct is connected with individual conduits separated from the main duct supplying the hydrogen-and-oxygen mixture by means of fixed gas pipe joints (155A, 155B) with a side inlet, situated on the shaft (147) in the spaces between the housings (152A, 152B),
wherein the gas pipe joints (155A, 155B) are in the shape of a sleeve and are equipped with thrust cylinder bearings with leak stoppers provided at the place of contact with the shaft (147), wherein the shaft (147) is provided with holes under the gas pipe joints (155A, 155B) so as to enable the flow of gas from the gas pipe joints (155A, 155B) to the corresponding sections (125A, 125B) of the main distribution duct.
